# EUROPÄISCHE PATENTANMELDUNG

(11) **EP 2 865 710 A1**
(43) Veröffentlichungstag der Anmeldung: **29.04.2015**
(21) Anmeldenummer: 13189735.7
(22) Anmeldetag: 22.10.2013
(51) Int. Cl.: C08K 5/00, C08L 27/12, C08J 3/24

(54) **Ionische Flüssigkeiten als Beschleuniger für die Vulkanisation von Fluorkautschuken als Ersatz von gängigen aber toxischen Vulkanisationsadditiven**

(71) Anmelder: LANXESS Deutschland GmbH, 50569 Köln (DE)
(72) Erfinder: Kelbch, Stefan, 53804 Much (DE); Djurdjevic, Jelena, 51381 Leverkusen (DE); Isenberg-Schulz, Olaf, 40764 Langenfeld (DE); Mezger, Martin, 51399 Burscheid (DE)

(57) **Zusammenfassung**

Vulkanisierbare Mischung enthaltend mindestens einen Fluorkautschuk, mindestens eine ionische Flüssigkeit als Beschleuniger, sowie mindestens einen Vernetzer, ein Verfahren zur Herstellung der erfindungsgemäßen vulkanisierbaren Mischung, ein Verfahren zur Herstellung eines Vulkanisats durch Vulkanisieren der erfindungsgemäßen Mischung, ein Vulkanisat, herstellbar nach dem erfindungsgemäßen Verfahren, die Verwendung der erfindungsgemäßen vulkanisierbaren Mischung zur Verarbeitung in der Spritzguß- oder Extrusions-Molding-Technologie, sowie durch Spritzpressen, Formpressen oder Kalandrieren, Spritzgußteile hergestellt aus der erfindungsgemäßen vulkanisierbaren Mischung sowie die Verwendung der erfindungsgemäßen vulkanisierbaren Mischung zur Herstellung von Formkörpern.

## Beschreibung

Die vorliegende Erfindung betrifft eine vulkanisierbare Mischung enthaltend mindestens einen Fluorkautschuk, mindestens eine ionische Flüssigkeit als Beschleuniger, sowie mindestens einen Vernetzer, ein Verfahren zur Herstellung der erfindungsgemäßen vulkanisierbaren Mischung, ein Verfahren zur Herstellung eines Vulkanisats durch Vulkanisieren der erfindungsgemäßen Mischung, ein Vulkanisat, herstellbar nach dem erfindungsgemäßen Verfahren, die Verwendung der erfindungsgemäßen vulkanisierbaren Mischung zur Verarbeitung in der Spritzguß- oder Extrusions-Molding-Technologie, sowie durch Spritzpressen, Formpressen oder Kalandrieren, Spritzgußteile hergestellt aus der erfindungsgemäßen vulkanisierbaren Mischung sowie die Verwendung der erfindungsgemäßen vulkanisierbaren Mischung zur Herstellung von Formkörpern.

Fluorkautschuke sind die Polymere der Wahl für Hochtemperatur-Anwendungen wie O-Ringe und Dichtungen, bei denen Undichtigkeiten auch nach längerer Druckverformung verhindert werden müssen, bei gleichzeitiger guter Chemikalienresistenz. Für die Massenproduktion dieser Teile setzt sich mehr und mehr die Spritzguß-Technologie durch. Sie verbindet niedrige Produktionskosten durch kürzere Zykluszeiten und höhere Automationsmechanismen mit niedrigen Fehlertoleranzen in den Dimensionen der einzelnen Teile verglichen mit der Formpress-Technologie.

Üblicherweise werden Fluorkautschuke peroxidisch oder bisphenolisch vernetzt. Die bisphenolische Vernetzung erfolgt im Allgemeinen unter Einsatz von Benzyltriphenylphosphoniumchlorid (BTPPC) als Beschleuniger. BTPPC wird als hoch toxisch eingestuft.

EP 1 591 479 A1 betrifft ionisch härtbare Fluorelastomere basierend auf Vinylidenfluorid (VDF), enthaltend:
a) 100 Gew.-Teile eines im Wesentlichen von polaren Endgruppen freien Fluorelastomers basierend auf VDF;
b) 0,1 bis 0,35 phr eines Beschleunigers;
c) 1 bis 15 phr eines Vernetzers;
d) 2 bis 20 phr eines oder mehrerer anorganischer Säureakzeptoren;
e) 0 bis 3 phr einer oder mehrerer basischer Verbindungen.

Als Beschleuniger sind in EP 1 591 479 A1 onium-organische Verbindungen der Klassen A (Verbindungen der Formel [QR²R³R⁴R⁵]ⁿ⁺X₁ⁿ⁻, wobei R², R³, R⁴ und R⁵ unabhängig voneinander Alkyl, Aryl, Arylalkyl, Alkenyl oder Kombinationen davon; Halogen; oder Cyano-, OR_{B} oder COOR_{B} Gruppen bedeuten können), B (amino-phosphonium Derivate), C (Phosphorane) oder D (Iminiumsalze) genannt. Als geeignete onium-organische Verbindungen der Klasse A werden Benzyltriphenylphosphoniumchlorid (BTPPC), Tetraphenylphosphoniumchlorid, Tetrabutylammoniumchlorid, Tetrabutylammoniumbisulfat, Tetrabutylammoniumbromid, Tributylallylphosphoniumchlorid, Tributylbenzylphosphoniumchlorid, Dibutyldiphenylphosphoniumchlorid, Tetrabutylphosphoniumchlorid und Triarylsulfoniumchlorid genannt. In den Beispielen wird 1,1-Diphenyl-1-benzyl-N-diethylphosphoramin eingesetzt.

WO 2007/085546 A1 betrifft ionisch härtbare Fluorelastomere basierend auf Vinylidenfluorid (VDF), die > 10 mol-% Hexafluoropropen-Einheiten und einen Vinylether der Formel CF₂=CFOCF₂OCF₃ enthalten und -COF Endgruppen aufweisen. Als Vulkanisationsbeschleuniger können onium-organische Verbindungen der Klassen A (Verbindungen der Formel [QR²R³R⁴R⁵]ⁿ⁺X₁ⁿ⁻, wobei R², R³, R⁴ und R⁵ unabhängig voneinander Alkyl, Aryl, Arylalkyl, Alkenyl oder Kombinationen davon; Halogen; oder Cyano-, OR_{B} oder COOR_{B} Gruppen bedeuten können), B (amino-phosphonium Derivate), C (Phosphorane) oder D (Iminiumsalze) eingesetzt werden. Als geeignete onium-organische Verbindungen der Klasse A werden die gleichen Verbindungen wie in EP 1 591 479 A1 genannt. In den Beispielen wird - wie in EP 1 591 479 A1 - 1,1-Diphenyl-1-benzyl-N-diethylphosphoramin eingesetzt.

JP 06-122802 A betrifft peroxidisch vulkanisierbare Fluorkautschukzusammensetzungen. Die Zusammensetzungen enthalten ein Fluor enthaltendes elastisches Copolymer, ein organisches Peroxid, eine ungesättigte polyfunktionelle Verbindung, ein bivalentes Metallhydroxid und/oder -oxid und ein spezielles organisches quartäres Phosphoniumsalz. Als geeignete quartäre Phosphoniumsalze werden aliphatische Phosphoniumsalze mit 1 bis 20 Kohlenstoffatomen genannt, wobei Tetrabutylphosphoniumchlorid, Tributyl(methoxypropyl)phosphoniumchlorid in JP 06-122802 A erwähnt sind. Bisphenolisch vernetzbare Fluorkautschukzusammensetzungen sind in JP 06-122802 A nicht erwähnt.

Aufgabe der vorliegenden Anmeldung gegenüber dem Stand der Technik ist es, bisphenolisch vernetzbare Fluorkautschukmischungen bereitzustellen, worin das üblicherweise als Beschleuniger eingesetzte Benzyltriphenylphosphoniumchlorid (BTPPC), das als hoch toxisch eingestuft wird, ganz oder teilweise durch weniger toxische Beschleuniger ersetzt wird, die eine ähnliche oder bessere Effektivität aufweisen, als BTPPC und zu Vulkanisaten mit vergleichbaren mechanischen Eigenschaften und Alterungsbeständigkeiten führen.

Diese Aufgabe wird gelöst durch die Bereitstellung einer vulkanisierbaren Mischung enthaltend
a) mindestens einen Fluorkautschuk als Komponente A;
b) mindestens einen Beschleuniger, der die folgende Formel (I) aufweist, als Komponente B

   [R¹R²R³R⁴X]^{m+} Y^{m-} (I)

   ,
   worin bedeuten
   R¹, R²,
   R³ und R⁴unabhängig voneinander C₁-C₃₀-Alkyl oder C₃-C₁₀-Cycloalkyl, wobei mindestens
   zwei der Reste R¹, R², R³ und R⁴ verschieden sind, bevorzugt unabhängig voneinander C₁-C₁₄-Alkyl, C₅-C₈-Cycloalkyl, wobei mindestens zwei der Reste R¹, R², R³ und R⁴ verschieden sind, besonders bevorzugt unabhängig voneinander C₁-bis C₆-Alkyl, wobei mindestens zwei der Reste R¹, R², R³ und R⁴ verschieden sind, ganz besonders bevorzugt unabhängig voneinander unverzweigtes C₁-bis C₆-Alkyl, wobei mindestens zwei der Reste R¹, R², R³ und R⁴ verschieden sind;
   X N, P, As, Sb, S or Si bevorzugt P oder N, besonders bevorzugt P;
   Y organisches oder anorganisches Anion, bevorzugt Halogenid, Sulfat, Acetat, Phosphat,
   Phosphonat, Hydroxid, Alkoxid, Phenat oder Bisphenat, besonders bevorzugt Halogenid, Phosphat, Hydroxid oder Alkoxid, besonders bevorzugt Halogenid oder Phosphat, ganz besonders bevorzugt Halogenid ausgewählt aus Cl und Br oder Diethylphosphat,
   m Ladung der Gruppe Y; und
c) mindestens einen bisphenolischen Vernetzer als Komponente C.

Die erfindungsgemäße vulkanisierbare Mischung zeichnet sich durch eine hohe Vulkanisationsgeschwindigkeit bei niedrigen Mengen des mindestens einen erfindungsgemäß eingesetzten Beschleunigers aus. Die mechanischen Eigenschaften der aus den Fluorkautschukmischungen hergestellten vulkanisierten Fluorkautschuke sowie ihre Alterungsbeständigkeit werden nicht beeinträchtigt.

### Beschleuniger (Komponente B)

Erfindungsgemäß enthält die vulkanisierbare Mischung mindestens einen Beschleuniger, der die folgende Formel (I) aufweist,

[R¹R²R³R⁴X]^{m+} Y^{m-} **(I)**

,
worin bedeuten
- R¹, R², R³ und R⁴: unabhängig voneinander C₁-C₃₀-Alkyl oder C₃-C₁₀-Cycloalkyl, wobei mindestens zwei der Reste R¹, R², R³ und R⁴ verschieden sind, bevorzugt unabhängig voneinander C₁-C₁₄-Alkyl oder C₅-C₈-Cycloalkyl, wobei mindestens zwei der Reste R¹, R², R³ und R⁴ verschieden sind, besonders bevorzugt unabhängig voneinander C₁-bis C₆-Alkyl, wobei mindestens zwei der Reste R¹, R², R³ und R⁴ verschieden sind, ganz besonders bevorzugt unabhängig voneinander unverzweigtes C₁-bis C₆-Alkyl, wobei mindestens zwei der Reste R¹, R², R³ und R⁴ verschieden sind;
- X: N, P, As, Sb, S or Si bevorzugt P und N, besonders bevorzugt P;
- Y: organisches oder anorganisches Anion, bevorzugt Halogenid, Sulfat, Acetat, Phosphat, Phosphonat, Hydroxid, Alkoxid, Phenat oder Bisphenat, besonders bevorzugt Halogenid, Phosphat, Hydroxid oder Alkoxid, besonders bevorzugt Halogenid oder Phosphat, ganz besonders bevorzugt Halogenid ausgewählt aus Cl und Br oder Diethylphosphat,
- m: Ladung der Gruppe Y.

Bei dem mindestens einen Beschleuniger der Formel (I) handelt es sich im Allgemeinen um eine ionische Flüssigkeit (IL), d.h. ein Salz, das bei Temperaturen unter 100°C flüssig ist. Bevorzugt handelt es sich bei dem mindestens einen Beschleuniger der Formel (I) um ein Salz, das bei Temperaturen ≥ 20°C flüssig ist (Raumtemperatur ionische Flüssigkeit). Die Einarbeitbarkeit der bei Temperaturen ≥ 20°C flüssigen Beschleuniger der Formel (I) in die Fluorkautschukmischung ist besonders gut.

Die Reste R¹, R², R³ und R⁴ können unabhängig voneinander linear (das bedeutet: unverzweigt) oder verzweigt oder cyclisch sein. Bevorzugt sind sie linear (unverzweigt).

In den Verbindungen der Formel (I) sind mindestens zwei der Reste R¹, R², R³ und R⁴ verschieden. Das bedeutet, dass z.B. die Reste R¹, R² und R³ identisch sind und der Rest R⁴ davon verschieden ist. Es ist auch möglich, dass R¹ und R² identisch sind und R³ und R⁴ davon verschieden, jedoch ebenfalls identisch sind. In beiden Fällen umfasst die Gruppe [R¹R²R³R⁴X]^{m+} in den Verbindungen der Formel (I) zwei verschiedene Alkylreste. Es ist ebenfalls möglich, dass die Gruppe [R¹R²R³R⁴X]^{m+} drei oder vier verschiedene Alkylreste umfasst. In einer bevorzugten Ausführungsform sind die Reste R¹, R² und R³ identisch, und der Rest R⁴ ist davon verschieden.

X in den Verbindungen der Formel (I) bedeutet N, P, As, Sb, S or Si bevorzugt P oder N, besonders bevorzugt P.

Bevorzugt ist die Gruppe

[R¹R²R³R⁴X]^{m+}

in Formel (I) ausgewählt ist aus der Gruppe bestehend aus Ethyltri(butyl)phosphonium, Tetradecyl(trihexyl)phosphonium, Triisobutyl(methyl)phosphonium, Trihexyl(tetradecyl)-phosphonium, Hexadecyl(tributyl)phosphonium und Tetradecyl(triisobutyl)phosphonium.

Y ist ein organisches oder anorganisches Anion, bevorzugt Halogenid, Sulfat, Acetat, Phosphat, Phosphonat, Hydroxid, Alkoxid, Phenat oder Bisphenat, besonders bevorzugt Halogenid, Hydroxid, Phosphat oder Alkoxid, besonders bevorzugt Halogenid oder Phosphat, ganz besonders bevorzugt Halogenid ausgewählt aus Cl und Br oder Diethylphosphat.

Besonders bevorzugte Verbindungen der Formel (I) sind ausgewählt aus der Gruppe bestehend aus Ethyltri(butyl)phosphoniumdiethylphosphat, Ethyltri(butyl)phosphoniumdiethylchlorid, Ethyltri(butyl)phosphoniumbromid, Tetradecyl(trihexyl)phosphoniumchlorid, Tetradecyl-(trihexyl)phosphoniumbromid, Tetradecyl(trihexyl)phosphoniumdecanoat, Tetradecyl(tri-hexyl)phosphonium-bis-2,2,4-trimethylpentylphosphinat, Tetradecyl(trihexyl)phosphonium-bis-triflamid, Triisobutyl(methyl)phosphoniumtosylat, Hexadecyl(tributyl)phosphoniumbromid, Tetradecyl(triisobutyl)phosphoniumchlorid, ganz besonders bevorzugt sind Ethyltri(butyl)phosphoniumdiethylphosphat und Tetradecyl(trihexyl)phosphoniumchlorid.

Insbesondere bevorzugt handelt es sich bei dem mindestens einen Beschleuniger um Ethyltri(butyl)phosphoniumdiethylphosphat, Hexadecyl(tributyl)phosphonium bromid oder Tetradecyl(isotributyl)phosphonium chlorid.

Die Verbindungen der Formel (I) sind kommerziell erhältlich oder nach dem Fachmann bekannten Verfahren herstellbar.

Es wurde gefunden, dass die mechanischen Eigenschaften durch Einmischung des mindestens einen Beschleunigers der Formel (I) sowie die Härte von aus den erfindungsgemäßen vulkanisierbaren Mischungen hergestellten Vulkanisaten und die Alterungseigenschaften nicht beeinträchtigt werden. Des Weiteren zeigen die erfindungsgemäß eingesetzten Beschleuniger (ionische Flüssigkeiten) der Formel (I) eine hervorragende Einmischbarkeit.

Der erfindungsgemäß eingesetzte mindestens eine Beschleuniger der Formel (I) wird in der vulkanisierbaren Mischung im Allgemeinen in einer Menge von >0 bis 3 phr, bevorzugt 0,05 bis 2 phr, besonders bevorzugt 0,1 bis 1,5 phr, ganz besonders bevorzugt 0,15 bis 1 phr eingesetzt (werden mehr als ein Beschleuniger eingesetzt, bezieht sich die Menge auf die Gesamtmenge der Beschleuniger), bezogen auf 100 Gew.-Teile des mindestens einen als Komponente A eingesetzten Fluorkautschuks (phr: parts per hundred of rubber).

### Komponente A

Als Komponente A wird in den erfindungsgemäßen Mischungen mindestens ein Fluorkautschuk eingesetzt.

Als Fluorkautschuke sind grundsätzlich alle dem Fachmann bekannten Fluorkautschuke geeignet. Bevorzugt handelt es sich bei dem mindestens einen erfindungsgemäß einsetzbaren Fluorkautschuk um einen Fluorkautschuk, der aus einem oder mehreren der folgenden Monomere aufgebaut ist:
- gegebenenfalls substituierte Ethylene, die neben Fluor Wasserstoff und/oder Chlor enthalten können, bevorzugt Vinylidenfluorid, Tetrafluorethylen und Chlortrifluorethylen,
- fluorierte 1-Alkene mit 3 bis 8 Kohlenstoffatomen, bevorzugt Hexafluorpropylen, 3,3,3-Trifluorpropylen, Chlorpentafluorpropylen, Hexafluorisobuten und
- perfluorierte Vinylether, bevorzugt
   solche der Formeln

CF₂ = CFOX oder CF₃-(CF₂)ₘ-CF=CFOX

mit X = C₁-C₃-Perfluoralkyl oder -(CF₂-CFY-O)ₒ-R_{F},
wobei
- o: 1 bis 4
- Y: F oder CF₃
- R_{F}: C₁ - C₃-Perfluoralkyl und
- m: 1 oder 2 bedeuten.

Bevorzugt handelt es sich bei dem erfindungsgemäß einsetzbaren mindestens einen Fluorkautschuk um ein Homo-, Co- oder Terpolymer aufgebaut aus einem oder mehreren der vorstehend genannten Monomere. Neben den vorstehend genannten Fluor enthaltenden Monomeren kann der erfindungsgemäß einsetzbare Fluorkautschuk zusätzlich aus nicht fluorierten Monomeren aufgebaut sein, z.B. aus Propylen oder Ethylen. Beispiele für geeignete Fluorkautschuke, die neben den vorstehend genannten Fluor enthaltenden Monomeren aus nicht fluorierten Monomeren aufgebaut sind, sind:
- Terpolymere aufgebaut aus Vinylidenfluorid, Tetrafluorethylen und Propylen,
- Terpolymere aufgebaut aus Vinylidenfluorid, Hexafluorpropylen, Tetrafluorethylen, perfluoriertem Vinylether, bevorzugt Perfluor-(methyl-vinyl-ether), und Ethylen.

Besonders bevorzugt wird eine Kombination aus Vinylidenfluorid, Hexafluorpropylen und/oder Tetrafluorethylen eingesetzt. Ganz besonders bevorzugte Fluorkautschuke sind:
- Copolymere aufgebaut aus Vinylidenfluorid und Hexafluorpropylen oder
- Terpolymere aufgebaut aus Vinylidenfluorid, Tetrafluorethylen und Hexafluorpropylen.

Des Weiteren kann der mindestens eine Fluorkautschuk - zusätzlich zu den vorstehend genannten Monomeren - aus den vorstehend genannten perfluorierten Vinylethern aufgebaut sein, dabei kann es sich um einen Perfluoroalkylvinylether handeln, bevorzugt um Perfluor-(methyl-vinyl-ether). Ein geeignetes Terpolymer ist:
- ein Terpolymer aufgebaut aus Vinylidenfluorid, Tetrafluorethylen, Hexafluorpropylen und mindestens einem perfluorierten Vinylether, bevorzugt Perfluor-(methyl-vinyl-ether).

Beispielsweise kann der mindestens eine Fluorkautschuk aus der folgenden monomeren Zusammensetzung aufgebaut sein:
20 bis 90 mol-% Vinylidenfluorid,
10 bis 80 mol-% Hexafluorpropylen,
0 bis 40 mol-% Tetrafluorethylen und
0 bis 30 mol-% perfluorierte Vinylether der Formel

CF₂ = CFOX oder CF₃-(CF₂)ₘ-CF=CFOX

mit X = C₁-C₃-Perfluoralkyl oder -(CF₂-CFY-O)ₒ-R_{F},
wobei
- o: 1 bis 4
- Y: F oder CF₃
- R_{F}: C₁ - C₃-Perfluoralkyl und
- m: 1 oder 2 bedeuten,
wobei die Gesamtsumme der Komponenten 100 mol% ergibt.

Ganz besonders bevorzugt handelt es sich bei dem erfindungsgemäß eingesetzten Fluorkautschuk um ein Copolymer aufgebaut aus 30 bis 60 mol.-% Vinylidenfluorid und 40 bis 70 mol.-% Hexafluorpropylen, ein Terpolymer aufgebaut aus 45 bis 85 mol.-% Vinylidenflourid, 1 bis 40 mol.-% Tetrafluorethylen und 15 bis 45 mol.-% Hexafluorpropylen oder ein Terpolymer aufgebaut aus 45 bis 85 mol.-% Vinylidenflourid, 1 bis 40 mol.-%, Tetrafluorethylen und 15 bis 45 mol.-% Hexafluorpropylen, wobei die Gesamtsumme der Komponenten des jeweiligen Co- oder Terpolymers jeweils 100 mol% ergibt.

In einer weiteren Ausführungsform handelt es sich bei dem erfindungsgemäß einsetzbaren mindestens einen Fluorkautschuk um einen Perfluorkautschuk (FFKM), aufgebaut aus vollständig fluorierten (perfluorierten) Monomeren. Geeignete Perfluorkautschuke sind dem Fachmann bekannt und kommerziell erhältlich.

Das zahlenmittlere Molekulargewicht des erfindungsgemäß eingesetzten Fluorkautschuks beträgt im Allgemeinen 25 bis 100 kg/mol, bevorzugt 40 bis 80 kg/mol. Die Molekulargewichtsverteilung M_{w}/Mₙ beträgt im Allgemeinen 1,5 bis 3,5. Das zahlenmittlere Molekulargewicht und das gewichtsmittlere Molekulargewicht werden mittels Gelpermeationschromatographie mit THF als Elutionsmittel ermittelt (DIN 55672-1 (GPC mit THF als Elutionsmittel)).

Die Mooney-Viskositäten ML1+10 des erfindungsgemäß eingesetzten Fluorkautschuks liegen bei 121 °C im Allgemeinen bei 1 bis 80, bevorzugt bei 15 bis 60. Die Mooney-Viskosität wird nach DIN 53523 bestimmt.

Der erfindungsgemäß eingesetzte mindestens eine Fluorkautschuk wird im Allgemeinen gemäß dem Stand der Technik bekannten Verfahren hergestellt (z.B. beschrieben in: "Encyclopedia of Polymer Science and Technology"; Autor: Mark Herman; ISBN-10: 0-471-27507-7). Bevorzugt erfolgt die Herstellung des Fluorkautschuks durch wässrige Emulsions- oder Suspensionspolymerisation (Ullmann's Encyclopedia of Ind. Chem., Vol. A-11, VCH-Verlagsgesellschaft, Weinheim, 1988, S. 417 ff.). Es ist ebenfalls möglich, den erfindungsgemäß eingesetzten mindestens einen Fluorkautschuk gemäß dem in DE 19844338 A1 beschriebenen Verfahren herzustellen.

In einer bevorzugten Ausführungsform wird der erfindungsgemäß eingesetzte Fluorkautschuk mittels radikalischer Emulsionspolymerisation, bevorzugt in einem batch Prozess, hergestellt. Dabei werden im Allgemeinen mindestens ein Emulgator, mindestens ein Starter und mindestens ein Regler zu Wasser zugegeben und anschließend die im Allgemeinen gasförmigen Monomere unter Druck aufgegeben. Bei Erhöhung der Temperatur wird die Reaktionspolymerisation gestartet. Unter - dem Fachmann bekannten - kontrollierten Bedingungen koagulieren die Monomere bei Zugabe mindestens eines Salzes zu einem Latex. Der Latex wir anschließend im Allgemeinen gemäß dem Fachmann bekannten Verfahren gewaschen, entwässert und getrocknet.

Der mindestens eine Fluorkautschuk (Komponente A) ist in der erfindungsgemäßen vulkanisierbaren Mischung zu 100 Gew.-Teilen enthalten (werden mehr als ein Fluorkautschuk eingesetzt, bezieht sich die Menge auf die Gesamtmenge der Fluorkautschuke).

### Komponente C

Als Komponente C enthält die erfindungsgemäße vulkanisierbare Mischung mindestens einen bisphenolischen Vernetzer.

Als bisphenolische Vernetzer eignen sich alle im Stand der Technik bekannten bisphenolischen Vernetzer.

Geeignete bisphenolische Vernetzer sind bevorzugt Bisphenole der allgemeinen Formel 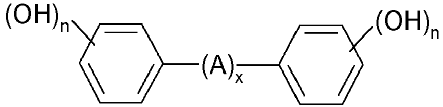 worin
- A: ein stabiler bivalenter Rest ist, bevorzugt ein bivalenter aliphatischer Rest mit 1 bis 13 Kohlenstoffatomen, ein bivalenter cycloaliphatischer Rest mit 3 bis 13 Kohlenstoffatomen oder ein bivalenter aromatischer Rest mit 6 bis 20 Kohlenstoffatomen, oder ein Thiorest, ein Oxyrest, ein Carbonylrest, ein Sulfinylrest oder ein Sulfonylrest, wobei A gegebenenfalls mit mindestens einem Chlor- oder Fluoratom substituiert sein kann;
- x: ist 0 oder 1;
- n: ist 1 oder 2; und
jeder aromatische Ring des bisphenolischen Vernetzers der Formel (I) gegebenenfalls mit einem oder mehreren Substituenten ausgewählt aus Chlor, Fluor, Brom, -CHO, einem Carboxyl- oder einem Acyl-Radikal, bevorzugt -COR, worin R OH, C₁-C₈-Alkyl, Aryl oder Cycloalkyl bedeutet, substituiert sein kann.

Besonders bevorzugt geeignete A-Gruppen sind Methylen, Ethylen, Chlorethylen, Fluorethylen, Difluorethylen, 1,3-Propylen, 1,2-Propylen, Tetramethylen, Chlortetramethylen, Fluortetramethylen, Trifluortetramethylen, 2-Methyl-1,3-propylen, 2-Methyl-1,2-propylen, Pentamethylen, Hexamethylen, Ethyliden, Dichloroethyliden, Difluorethyliden, Propyliden, Isopropyliden, Trifluoroisopropyliden, Hexafluoroisopropyliden, Butyliden, Heptachlorobutyliden, Heptafluorobutyliden, Pentyliden, Hexyliden, 1,1-Cyclohexyliden, 1,4-Cyclohexylen, 2-Chloro-1,4-cyclohexylen, 2-Fluoro-1,4-cyclohexylen, 1,3-Cyclohexylen, Cyclopentylen, Chlorocyclopentylen, Fluoropentylen, Cycloheptylen, m-Phenylen, p-Phenylen, 2-Chloro-1,4-phenylen, 2-Fluoro-1,4-phenylen, o-Phenylen, Methylphenylen, Dimethylphenylen, Trimethylphenylen, Tetramethylphenylen, 1,4-Naphthylen, 3-Fluor-1,4-naphthylen, 5-Chloro-1,4-naphthylen, 1,5-Naphthylen und 2,6-Naphthylen.

Ganz besonders bevorzugt ist der bisphenolische Vernetzer ausgewählt aus 2,2-Bis(4-hydroxyphenyl)hexafluorpropan (Bisphenol AF) und 4,4'-Dihydroxydiphenylsulfon.

Die vorstehend erwähnten bisphenolischen Vernetzer sind kommerziell erhältlich bzw. gemäß dem Fachmann bekannten Verfahren herstellbar.

Im Allgemeinen wird die Komponente C, d.h. der bisphenolische Vernetzer, in einer Menge von 1 bis 10 phr, bevorzugt 1,5 bis 7 phr, besonders bevorzugt 2 bis 5 phr eingesetzt (werden mehr als ein Vernetzer eingesetzt, bezieht sich die Menge auf die Gesamtmenge der Vernetzer), bezogen auf 100 Gew.-Teile des mindestens einen als Komponente A eingesetzten Fluorkautschuks (phr: parts per hundred of rubber).

Ein weiterer Gegenstand der vorliegenden Erfindung ist eine vulkanisierbare Mischung enthaltend
a) 100 Gew.-Teile der Komponente A,
b) >0 bis 3 phr, bevorzugt 0,05 bis 2 phr, besonders bevorzugt 0,1 bis 1,5 phr, ganz besonders bevorzugt 0,15 bis 1 phr der Komponente B und
c) 1 bis 10 Gew.-Teile, bevorzugt 1,5 bis 7 Gew.-Teile, besonders bevorzugt 2 bis 5 Gew.-Teile der Komponente C.

Die Gew.-Teile der Komponenten B und C sind jeweils bezogen auf 100 Gew.-Teile der Komponente A.

Geeignete Komponenten A, B und C sind die vorstehend erwähnten Komponenten A, B und C.

Neben den Komponenten A, B und C kann die erfindungsgemäße vulkanisierbare Mischung zusätzliche Komponenten aufweisen.

### Komponente D

Zusätzlich kann die erfindungsgemäße vulkanisierbare Mischung neben den Komponenten A, B und C und gegebenenfalls mindestens einen Füllstoff D enthalten.

Bei dem Füllstoff kann es sich um einen organischen oder anorganischen Füllstoff handeln. Die Füllstoffe können isotroper oder anisotroper Natur sein. Geeignete Füllstoffe sind dem Fachmann bekannt. Beispielsweise können Füllstoffe ausgewählt aus Ruß, Aktivkohle, Graphit, SiO₂, Ton, Kieselgur, Kalk, Wollastonit, Kalziumcarbonat, Kalziumsilikat, Kalziumfluorid, Bariumsulfat, Polyhalogenolefine, insbesondere Polytetrafluorethylen (PTFE) und Polychlortrifluorethylen, und Mischungen davon eingesetzt werden. Besonders bevorzugt wird Ruß als Füllstoff eingesetzt.

Die Menge der Füllstoffe ist im Allgemeinen abhängig von dem jeweiligen Verstärkungsgrad der Füllstoffe. Die Füllstoffe werden in den erfindungsgemäßen vulkanisierbaren Mischungen im Allgemeinen in einer Menge von 0 bis 65 Gew.-Teilen (bezogen auf 100 Gew.-Teile des als Komponente A eingesetzten Fluorkautschuk), bevorzugt 20 bis 60 Gew.-Teilen, besonders bevorzugt 25 bis 55 Gew.-Teilen eingesetzt (werden mehr als ein Füllstoff eingesetzt, bezieht sich die Menge auf die Gesamtmenge der Füllstoffe).

Ein weiterer Gegenstand der vorliegenden Erfindung ist eine vulkanisierbare Mischung enthaltend
a) 100 Gew.-Teile der Komponente A,
b) >0 bis 3 phr, bevorzugt 0,05 bis 2 phr, besonders bevorzugt 0,1 bis 1,5 phr, ganz besonders bevorzugt 0,15 bis 1 phr der Komponente B,
c) 1 bis 10 Gew.-Teile, bevorzugt 1,5 bis 7 Gew.-Teile, besonders bevorzugt 2 bis 5 Gew.-Teile der Komponente C,
d) 0 bis 65 Gew.-Teile, bevorzugt 20 bis 60 Gew.-Teile, besonders bevorzugt 25 bis 50 Gew.-Teile der Komponente D, bevorzugt Ruß.

Die Gew.-Teile der Komponenten B, C und D sind jeweils bezogen auf 100 Gew.-Teile der Komponente A.

Geeignete Komponenten A, B, C und D sind die vorstehend erwähnten Komponenten A, B, C und D.

### Komponente E

Zusätzlich kann die erfindungsgemäße vulkanisierbare Mischung neben den Komponenten A, B, C und gegebenenfalls mindestens einem Füllstoff D mindestens einen Säureakzeptor als Komponente E enthalten.

Der Säureakzeptor dient im Allgemeinen zur Neutralisation von Fluorwasserstoff, der gegebenenfalls während des Vulkanisierungsprozesses der vulkanisierbaren Mischung freigesetzt wird. Geeignete Säureakzeptoren sind dem Fachmann bekannt. Beispielsweise können Metalloxide und/oder Metallhydroxide eingesetzt werden, wie Magnesiumoxid, Kalziumoxid, Zinkoxid, Magnesiumhydroxid und/oder Kalziumhydroxid. Des Weiteren können basische Metallsalze organischer Säuren als Säureakzeptoren eingesetzt werden wie zweibasiges Bleiphosphat, Natriumstearat und/oder Magnesiumoxalat. Ganz besonders bevorzugt werden Calciumhydroxid, Magnesiumoxid und/oder Zinkoxid als Säureakzeptoren eingesetzt.

Im Allgemeinen wird der mindestens eine Säureakzeptor in einer Menge von 0 bis 15 Gew.-Teilen (bezogen auf 100 Gew.-Teile des als Komponente A eingesetzten Fluorkautschuks), bevorzugt 1 bis 12 Gew.-Teilen, besonders bevorzugt 2 bis 10 Gew.-Teilen eingesetzt (werden mehr als ein Säureakzeptor eingesetzt, bezieht sich die Menge auf die Gesamtmenge der Säureakzeptoren).

### Komponente F

Zusätzlich zu den Komponenten A, B und C sowie gegebenenfalls D und gegebenenfalls E kann die erfindungsgemäße vulkanisierbare Mischung mindestens eine weitere polymere Komponente enthalten, z.B. mindestens ein thermoplastisches Elastomer (TPE), bevorzugt mindestens ein dynamisch vernetzbares thermoplastisches Elastomer (TPV). Geeignete thermoplastische Elastomere sind dem Fachmann bekannt und kommerziell erhältlich.

Im Allgemeinen wird die mindestens eine polymere Komponente, bevorzugt das mindestens eine thermoplastische Elastomer, wenn Sie in den erfindungsgemäßen vulkanisierbaren Mischungen vorliegt, in einer Menge von 20 bis 70 Gew.-Teilen (bezogen auf 100 Gew.-Teile des als Komponente A eingesetzten Fluorkautschuks), bevorzugt 30 bis 60 Gew.-Teilen, besonders bevorzugt 35 bis 55 Gew.-Teilen eingesetzt (werden mehr als ein thermoplastisches Elastomer eingesetzt, bezieht sich die Menge auf die Gesamtmenge der thermoplastischen Elastomere).

### Komponente G

Zusätzlich zu den Komponenten A, B und C sowie gegebenenfalls D, gegebenenfalls E und gegebenenfalls F kann die erfindungsgemäße vulkanisierbare Mischung mindestens einen Dicarbonsäureester oder Polyetherester enthalten.

Vulkanisierbare Mischungen, die mindestens einen Dicarbonsäureester oder Polyetherester enthalten, zeichnen sich durch eine gute Extrudierbarkeit sowie ein gutes Spritzgußverhalten aus. Die Mooney-Viskosität dieser erfindungsgemäßen vulkanisierbaren Mischung enthaltend mindestens einen Dicarbonsäureester oder Polyetherester ist gegenüber vulkanisierbaren Mischungen, die keinen Dicarbonsäureester oder Polyetherester enthalten, deutlich herab gesetzt. Des Weiteren kann die Vulkanisation der erfindungsgemäßen vulkanisierbaren Mischungen durch die Anwesenheit mindestens eines Dicarbonsäureesters oder Polyetheresters noch weiter beschleunigt werden.

Bevorzugte Dicarbonsäureester oder Polyetherester weisen einen Siedepunkt von > 250°C auf. Besonders bevorzugt sind der Dicarbonsäureester und der Polyetherester OH-Gruppen frei. Ganz besonders bevorzugt ist der Dicarbonsäureester ausgewählt ist aus der Gruppe bestehend aus Adipaten, Phthalaten und Cyclohexandicarbonsäureestern. Besonders geeignete Dicarbonsäureester und Polyetherester sind in EP 2 644 648 A1 offenbart.

Der mindestens eine Dicarbonsäureester oder Polyetherester kann in den erfindungsgemäßen vulkanisierbaren Mischungen in einer Menge von >0 bis 20 Gew.-Teilen, bevorzugt 0,5 bis 15 Gew.-Teilen, besonders bevorzugt 1,0 bis 12 Gew.-Teilen, ganz besonders bevorzugt 1,2 bis 11,5 Gew.-Teilen, insbesondere ganz besonders bevorzugt 3,0 bis 11 Gew.-Teilen, weiter insbesondere ganz besonders bevorzugt 4,0 bis 10 Gew.-Teilen (jeweils bezogen auf 100 Gew.-Teile des als Komponente A eingesetzten Fluorkautschuks) vorliegen (werden mehr als ein Dicarbonsäureester oder Polyetherester eingesetzt, bezieht sich die Menge auf die Gesamtmenge der Dicarbonsäureester oder Polyetherester).

### Weitere Komponenten

Zusätzlich zu den Komponenten A, B und C sowie gegebenenfalls D, gegebenenfalls E, gegebenenfalls F und gegebenenfalls G kann die erfindungsgemäße vulkanisierbare Mischung weitere Komponenten, z.B. Verarbeitungshilfsmittel und/oder Farbstoffe, enthalten. Diese weiteren Komponenten, insbesondere Verarbeitungshilfsmittel und Farbstoffe, sind dem Fachmann bekannt.

Üblicherweise werden die vorstehend erwähnten weiteren Komponenten jeweils in einer Menge von 0 bis 3 Gew.-Teilen (bezogen auf 100 Gew.-Teile des als Komponente A eingesetzten Fluorkautschuks), bevorzugt jeweils in einer Menge von 0,1 bis 1,5 Gew.-Teilen eingesetzt.

Die erfindungsgemäße vulkanisierbare Mischung weist im Allgemeinen eine Mooney-Viskosität (ML1+10@121°C) von 20 bis 100, bevorzugt 30 bis 90, besonders bevorzugt 35 bis 80 auf. Die Mooney-Viskosität wird nach DIN 53523 bestimmt.

Ein weiterer Gegenstand der vorliegenden Erfindung ist ein Verfahren zur Herstellung der erfindungsgemäßen vulkanisierbaren Mischung durch Mischen der Komponenten A, B und C sowie gegebenenfalls D, gegebenenfalls E, gegebenenfalls F und gegebenenfalls G sowie der gegebenenfalls weiteren vorstehend genannten vorliegenden Komponenten. Geeignete Mischverfahren sind dem Fachmann bekannt. Beispielsweise können zum Mischen Schnecken, Kneter oder Zweiwalzen-Gummimischwerke eingesetzt werden. Das Mischen wird im Allgemeinen bei Temperaturen von 10 bis 130 °C, bevorzugt 15 bis 110 °C durchgeführt.

Die erfindungsgemäßen vulkanisierbaren Mischungen können in beliebigen, dem Fachmann bekannten Verfahren, weiter verarbeitet werden, z.B. durch Spritzgießen (injection molding) oder Extrusion sowie durch Spritzpressen (transfer molding), Formpressen (compression molding) oder Kalandrieren. Geeignete Verfahren sind dem Fachmann bekannt.

In einer Ausführungsform werden dabei die erfindungsgemäßen vulkanisierbaren Mischungen, bevorzugt mit Hilfe von dem Fachmann bekannten Spritzgießmaschinen, in im Allgemeinen 160 bis 230°C heiße Formen gespritzt und je nach Mischungsrezeptur und Formtemperatur im Allgemeinen 20 bis 300 s in der Form gehalten und dabei vulkanisiert.

Die erfindungsgemäßen Fluorkautschukmischungen zeichnen sich durch eine hohe Vulkanisationsgeschwindigkeit bei niedrigen Mengen des mindestens einen erfindungsgemäß eingesetzten Beschleunigers aus. Die mechanischen Eigenschaften der aus den Fluorkautschukmischungen hergestellten vulkanisierten Fluorkautschuke sowie ihre Alterungsbeständigkeit werden nicht beeinträchtigt.

Ein weiterer Gegenstand der vorliegenden Erfindung ist somit ein Verfahren zur Herstellung eines Vulkanisats durch Vulkanisieren einer erfindungsgemäßen vulkanisierbaren Mischung. Bevorzugt erfolgt das Vulkanisieren nach dem vorstehend erwähnten Verfahren. Geeignete weitere Vulkanisierungsverfahren sind dem Fachmann bekannt.

Ein weiterer Gegenstand der vorliegenden Erfindung ist ein Vulkanisat, herstellbar nach dem erfindungsgemäßen Verfahren.

Es wurde gefunden, dass die mechanischen Eigenschaften des erfindungsgemäßen Vulkanisats, insbesondere das Zug-Dehnungsverhalten, die Härte und der Druckverformungsrest, vergleichbar sind mit den mechanischen Eigenschaften von Vulkanisaten, die auf Basis von vulkanisierbaren Mischungen erhalten werden, die Benzyltriphenylphosphoniumchlorid (BTPPC) als Beschleuniger enthalten.

Die erfindungsgemäßen vulkanisierbaren Mischungen beziehungsweise die erfindungsgemäßen Vulkanisate eignen sich hervorragend zur Herstellung von Formkörpern aller Art, insbesondere Dichtungen, Schläuche, Profile, Dämpfungselemente, Kabelmäntel, Statoren, Kupplungen oder Manschetten.

Ein weiterer Gegenstand der vorliegenden Erfindung ist daher die Verwendung der erfindungsgemäßen vulkanisierbaren Mischungen beziehungsweise die Verwendung des erfindungsgemäßen Vulkanisats zur Herstellung von Formkörpern.

Die nachfolgenden Beispiele erläutern die Erfindung zusätzlich.

### Beispiele

### Beispiel 1: Normen/Bedingungen/Informationen

| Test | Bedingungen | Norm | Information |
|---|---|---|---|
| Mooney | ML1+4@121°C | DIN 53523 | Mooney-Viskosität |
| | ML1+8@121°C | | |
| | ML1+10@121°C | | |
| Moving Die Rheomometer (MDR) | "Moving Die Rheomometer" von Alpha technology (MDR2000) | ISO 6502 oder ASTM D 5289 | Vernetzungsverhalten: Delta S' |
| | | | Umsatzzeit 50% |
| | | | Umsatzzeit 90% |
| Zug-Dehnungsverhalten | Zugversuch Normstab 2 | DIN 53504 | Zugfestigkeit (ZF) |
| | | | Zugdehnung (ZD) |
| Härte | Shore A | ISO 7619 | Härte |
| Druckverformungsrest (DVR) | 70h/200°C | DIN 53517 | Druckverformungsrest |

### Beispiel 2: Vernetzbare Zusammensetzungen und Vulkanisate

### Allgemeine Arbeitsvorschrift:

Zur Herstellung einer vernetzbaren Zusammensetzung werden auf einem gut gekühlten Zweiwalzenmischwerk die einzelnen Komponenten der entsprechenden nachstehend genannten Mischungen (1 a, 1b, 2a, 2b) bei einer Temperatur von 20°C eingearbeitet.

Zur Bestimmung des Vernetzungsverhaltens werden die so hergestellten jeweiligen Mischungen in einem "Moving Die Rheomometer" von Alpha Technology bei 177 °C untersucht (Messzeit: 30 min).

Die jeweilige Mischung wird bei 177 °C und 120 bar in Formen für 100 x 100 x 2 mm Platten, 6,3 mm Klappenfell 10 min druckvulkanisiert und anschließend in einem Umluftofen nachvulkanisiert (24 h bei 230 °C). An den vulkanisierten Formkörpern werden das Zug-Dehnungsverhalten, die Härte und die Druckverformungsreste bestimmt.

Die Ergebnisse sowie ein Vergleich mit einem Vergleichsvulkanisat sind nachstehend aufgelistet. Das Vergleichsvulkanisat (Standard) ist mit den nachstehend genannten erfindungsgemäßen

Mischungen identisch, mit dem einzigen Unterschied, dass der Beschleuniger Benzyltriphenylphosphoniumchlorid (BTPPC) ist und in einer Menge von 2 phr eingesetzt wird.

### Erfindungsgemäße Mischungen

### Standard

| | |
|---|---|
| 100 phr | Levatherm F ® 6623¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 2 phr | Levatherm FC20 |

| | |
|---|---|
| 1) FKM-Copolymer aufgebaut aus Vinylidenfluorid und Hexafluorpropylen von Lanxess Deutschland GmbH 2) Luvomaxx MT N 990; Lehmann & Voss 3) Sturge 4) Maglite DE, Rhein Chemie 5) Bisphenol AF, 50 Gew.%ig angebatcht in Levatherm F ® 6623 | |

### Ii Mischung 1a

| | |
|---|---|
| | |
| 100 phr | Levatherm F ® 6623¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 1 phr | Cyphos IL® 101⁶⁾ |

| | |
|---|---|
| 1) FKM-Copolymer aufgebaut aus Vinylidenfluorid und Hexafluorpropylen von Lanxess Deutschland GmbH 2) Luvomaxx MT N 990; Lehmann & Voss 3) Sturge 4) Maglite DE, Rhein Chemie 5) Bisphenol AF, 50 Gew.%ig angebatcht in Levatherm F ® 6623 6) Tetradecyl(trihexyl)phosphoniumchlorid | |

### Iii Mischung 1b

| | |
|---|---|
| 100 phr | Levatherm F ® 6623¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 0,5 phr | Cyphos IL® 101⁶⁾ |

| | |
|---|---|
| 1) FKM-Copolymer aufgebaut aus Vinylidenfluorid und Hexafluorpropylen von Lanxess Deutschland GmbH 2) Lehmann & Voss 3) Sturge 4) Rhein Chemie 5) Bisphenol AF, 50 Gew.%ig angebatcht in Levatherm F ® 6623 6) Tetradecyl(trihexyl)phosphoniumchlorid | |

### Iiii Mischung 2a

| | |
|---|---|
| 100 phr | Levatherm F ® 6623¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 1 phr | Cyphos IL ® 169⁶⁾ |

| | |
|---|---|
| 1) FKM-Copolymer aufgebaut aus Vinylidenfluorid und Hexafluorpropylen von Lanxess Deutschland GmbH 2) Lehmann & Voss 3) Sturge 4) Rhein Chemie 5) Bisphenol AF, 50 Gew.%ig angebatcht in Levatherm F ® 6623 6) Ethyltri(butyl)phosphoniumdiethylphosphat | |

### Iiv Mischung 2b

| | |
|---|---|
| 100 phr | Levatherm F ® 6623¹⁾ |
| 30 phr | Ruß N990 ®²⁾ |
| 6 phr | Ca(OH)₂³⁾ |
| 3 phr | MgO⁴⁾ |
| 4 phr | Levatherm FC30 ®⁵⁾ |
| 0,5 phr | Cyphos IL ® 169⁶⁾ |

| | |
|---|---|
| 1) FKM-Copolymer aufgebaut aus Vinylidenfluorid und Hexafluorpropylen von Lanxess Deutschland GmbH 2) Lehmann & Voss 3) Sturge 4) Rhein Chemie 5) Bisphenol AF, 50 Gew.%ig angebatcht in Levatherm F ® 6623 6) Ethyltri(butyl)phosphoniumdiethylphosphat | |

### Beispiel 3: Eigenschaften der vernetzbaren Zusammensetzungen und Vulkanisate basierend auf den Mischungen 1a, 1b, 2a und 2b, sowie basierend auf dem Standard.

In den nachfolgenden Tabellen sind die Eigenschaften der erfindungsgemäßen vernetzbaren Zusammensetzungen und Vulkanisate basierend auf den Mischungen 1a, 1b, 2a und 2b im Vergleich zu dem vorstehend genannten Standard zusammengefasst.

Untersucht wurden Mooney Viskosität, MDR, Zugfestigkeit, Reißdehnung, DVR und Härte.

### 3.1. DVR

| | | | |
|---|---|---|---|
| | Zeit | h | 70 |
| | Temperatur | °C | 200 |
| | Verformung | % | 25 |
| | Prüftemperatur | °C | 23 |
| | Gleitmittel | Glimmerpuder | |

| | Standard | Mischung 1a | Mischung 1b | Mischung 2a | Mischung 2b |
|---|---|---|---|---|---|
| DVR | 24,39 | 39,25 | 20,18 | 43,01 | 23,84 |

### 3.2 Härte (Mittelwert)

| | | |
|---|---|---|
| Temperatur | °C | 23 |

| | Standard | Mischung 1a | Mischung 1b | Mischung 2a | Mischung 2b |
|---|---|---|---|---|---|
| Härte Mittelwert (Shore A) | 72,6 | 81,7 | 74,9 | 81,6 | 74,9 |

### 3.3 Reißdehnung und Festigkeit

| | | |
|---|---|---|
| Temperatur | °C | 23 |

| | Standard | Mischung 1a | Mischung 1b | Mischung 2a | Mischung 2b |
|---|---|---|---|---|---|
| D Median (%) | 194 | 137 | 190 | 159 | 143 |
| F Median (MPa) | 14,4 | 12,8 | 16,1 | 13,1 | 12 |

### 3.4 Mooney Viskosität der vernetzbaren Zusammensetzung

| Rotorgröße | | L |
|---|---|---|
| Vorheizzeit | [min] | 1 |
| Messzeit | [min] | 10 |
| Temperatur | [°C] | 121 |

| | | Standard | Mischung 1a | Mischung 1b | Mischung 2a | Mischung 2b |
|---|---|---|---|---|---|---|
| ML 1+4 | [ME] | 66,0 | 60,7 | 75,4 | 60,7 | 62,0 |
| ML 1+8 | [ME] | 63,08 | 59,29 | 73,24 | 66,58 | 62,58 |
| ML 1+10 | [ME] | 62,34 | 59,07 | 72,86 | 80,07 | 67,13 |

### 3.5 MDR

| | | |
|---|---|---|
| Prüftemperatur | [°C] | 177 |
| Prüfzeit | [min] | 30 |

| | Standard | Mischung 1a | Mischung 1b | Mischung 2a | Mischung 2b |
|---|---|---|---|---|---|
| Drehmomentmaximum | 20,4 | 28,5 | 25,2 | 23,2 | 24,3 |
| Delta S' | 19,6 | 27,6 | 24,2 | 22,1 | 23,3 |
| Umsatzzeit 50% | 95,6 | 102,0 | 271,9 | 41,4 | 131,3 |
| Umsatzzeit 80% | 119 | 147 | 351 | 56 | 168 |

Die in den vorstehenden Tabellen dargestellten Ergebnisse zeigen, dass die erfindungsgemäß eingesetzten weniger toxischen Beschleuniger eine ähnliche oder bessere Effektivität aufweisen, als BTPPC und zu Vulkanisaten mit vergleichbaren mechanischen Eigenschaften führen.

## Patentansprüche

1. Vulkanisierbare Mischung, enthaltend
a) mindestens einen Fluorkautschuk als Komponente A;
b) mindestens einen Beschleuniger, der die folgende Formel (I) aufweist, als Komponente B
[R¹R²R³R⁴X]^{m+} Y^{m-} (I)
,
worin bedeuten
R¹, R², R³ und R⁴ unabhängig voneinander C₁-C₃₀-Alkyl oder C₃-C₁₀-Cycloalkyl, wobei mindestens zwei der Reste R¹, R², R³ und R⁴ verschieden sind, bevorzugt unabhängig voneinander C₁-C₁₄-Alkyl, C₅-C₈-Cycloalkyl, wobei mindestens zwei der Reste R¹, R², R³ und R⁴ verschieden sind, besonders bevorzugt unabhängig voneinander C₁-bis C₆-Alkyl, wobei mindestens zwei der Reste R¹, R², R³ und R⁴ verschieden sind, ganz besonders bevorzugt unabhängig voneinander unverzweigtes C₁-bis C₆-Alkyl, wobei mindestens zwei der Reste R¹, R², R³ und R⁴ verschieden sind;
X N, P, As, Sb, S or Si, bevorzugt P und N, besonders bevorzugt P;
Y organisches oder anorganisches Anion, bevorzugt Halogenid, Sulfat, Acetat, Phosphat, Phosphonat, Hydroxid, Alkoxid, Phenat oder Bisphenat, besonders bevorzugt Halogenid, Phosphat, Hydroxid oder Alkoxid, besonders bevorzugt Halogenid oder Phosphat, ganz besonders bevorzugt Halogenid ausgewählt aus Cl und Br oder Diethylphosphat,
m Ladung der Gruppe Y; und
c) mindestens einen bisphenolischen Vernetzer als Komponente C.

2. Vulkanisierbare Mischung nach Anspruch 1, **dadurch gekennzeichnet, dass** X in Formel (I) P bedeutet; bevorzugt ist die Gruppe
[R¹R²R³R⁴X]^{m+}
in Formel (I) ausgewählt ist aus der Gruppe bestehend aus Ethyltri(butyl)phosphonium, Tetradecyl(trihexyl)phosphonium, Triisobutyl(methyl)phosphonium, Trihexyl(tetradecyl)phosphonium, Hexadecyl(tributyl)phosphonium und Tetradecyl(triisobutyl)phosphonium.

3. Vulkanisierbare Mischung nach Anspruch 1 oder 2, **dadurch gekennzeichnet, dass** der Fluorkautschuk ein Fluorkautschuk ist, aufgebaut aus einem oder mehreren der folgenden Monomere:
- gegebenenfalls substituierte Ethylene, die neben Fluor Wasserstoff und/oder Chlor enthalten können, bevorzugt Vinylidenfluorid, Tetrafluorethylen und Chlortrifluorethylen,
- fluorierte 1-Alkene mit 3 bis 8 Kohlenstoffatomen, bevorzugt Hexafluorpropylen, 3,3,3-Trifluorpropylen, Chlorpentafluorpropylen, Hexafluorisobuten
- und/oder perfluorierte Vinylether;
bevorzugt ist der Fluorkautschuk ein Homo-, Co- oder Terpolymer aufgebaut aus einem oder mehreren der vorstehend genannten Monomere; besonders bevorzugt wird eine Kombination aus Vinylidenfluorid, Hexafluorpropylen und/oder Tetrafluorethylen eingesetzt; ganz besonders bevorzugte Fluorkautschuke sind:
- Copolymere aufgebaut aus Vinylidenfluorid und Hexafluorpropylen, oder
- Terpolymere aufgebaut aus Vinylidenfluorid, Tetrafluorethylen und Hexafluorpropylen, oder
- Terpolymere aufgebaut aus Vinylidenfluorid, Tetrafluorethylen, Hexafluorpropylen und perfluoriertem Vinylether, bevorzugt Perfluor-(methyl-vinyl-ether).

4. Vulkanisierbare Mischung nach einem der Ansprüche 1 bis 3, **dadurch gekennzeichnet, dass** der mindestens eine bisphenolische Vernetzer C ausgewählt ist aus Bisphenolen der allgemeinen Formel 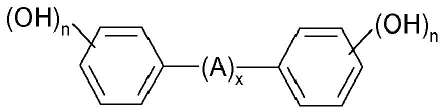 worin
A ein stabiler bivalenter Rest ist, bevorzugt ein bivalenter aliphatischer Rest mit 1 bis 13 Kohlenstoffatomen, ein bivalenter cycloaliphatischer Rest mit 3 bis 13 Kohlenstoffatomen oder ein bivalenter aromatischer Rest mit 6 bis 20 Kohlenstoffatomen, oder ein Thiorest, ein Oxyrest, ein Carbonylrest, ein Sulfinylrest oder ein Sulfonylrest, wobei A gegebenenfalls mit mindestens einem Chlor- oder Fluoratom substituiert sein kann;
x ist 0 oder 1;
n ist 1 oder 2; und
jeder aromatische Ring des bisphenolischen Vernetzers der Formel (I) gegebenenfalls mit einem oder mehreren Substituenten ausgewählt aus Chlor, Fluor, Brom, -CHO, einem Carboxyl- oder einem Acyl-Radikal, bevorzugt -COR, worin R OH, C₁-C₈-Alkyl, Aryl oder Cycloalkyl bedeutet, substituiert sein kann; und der bisphenolische Vernetzer bevorzugt ausgewählt ist aus 2,2-Bis(4-hydroxyphenyl)hexafluorpropan (Bisphenol AF) und 4,4'-Dihydroxydiphenylsulfon.

5. Vulkanisierbare Mischung nach einem der Ansprüche 1 bis 4 enthaltend
a) 100 Gew.-Teile der Komponente A,
b) >0 bis 3 phr, bevorzugt 0,05 bis 2 phr, besonders bevorzugt 0,1 bis 1,5 phr, ganz besonders bevorzugt 0,15 bis 1 phr der Komponente B, bezogen auf 100 Gew.-Teile der Komponente A, und
c) 1 bis 10 Gew.-Teile, bevorzugt 1,5 bis 7 Gew.-Teile, besonders bevorzugt 2 bis 5 Gew.-Teile der Komponente C, bezogen auf 100 Gew.-Teile der Komponente A.

6. Vulkanisierbare Mischung nach einem der Ansprüche 1 bis 5 enthaltend mindestens einen Füllstoff als Komponente D, bevorzugt ausgewählt aus Ruß, Aktivkohle, Graphit, SiO₂, Ton, Kieselgur, Kalk, Wollastonit, Kalziumcarbonat, Kalziumsilikat, Kalziumfluorid, Bariumsulfat, Polyhalogenolefine, insbesondere Polytetrafluorethylen (PTFE) und Polychlortrifluorethylen, und Mischungen davon, besonders bevorzugt Ruß.

7. Vulkanisierbare Mischung nach einem der Ansprüche 1 bis 6 enthaltend zusätzlich mindestens einen Säureakzeptor als Komponente E, bevorzugt ausgewählt aus Metalloxiden, Metallhydroxiden und Metallsalzen, besonders bevorzugt ausgewählt aus Magnesiumoxid, Kalziumoxid, Zinkoxid, Magnesiumhydroxid, Kalziumhydroxid, zweibasigem Bleiphosphat, Natriumstearat, Magnesiumoxalat und Mischungen davon, ganz besonders bevorzugt ausgewählt aus Calciumhydroxid, Magnesiumoxid, Zinkoxid und Mischungen davon.

8. Vulkanisierbare Mischung nach einem der Ansprüche 1 bis 7 enthaltend zusätzlich mindestens eine weitere polymere Komponente als Komponente F, bevorzugt mindestens ein thermoplastisches Elastomer.

9. Vulkanisierbare Mischung nach einem der Ansprüche 1 bis 8 enthaltend zusätzlich mindestens einen Dicarbonsäureester oder Polyetherester als Komponente G.

10. Vulkanisierbare Mischung nach einem der Ansprüche 1 bis 9, **dadurch gekennzeichnet, dass** sie eine Mooney-Viskosität (ML1+10@121°C) von 20 bis 100, bevorzugt 30 bis 90, besonders bevorzugt 35 bis 80 aufweist.

11. Verfahren zur Herstellung der vulkanisierbaren Mischungen nach einem der Ansprüche 1 bis 10 durch Mischen der Komponenten A, B und C sowie gegebenenfalls D, gegebenenfalls E, gegebenenfalls F, gegebenenfalls G und gegebenenfalls weiterer Komponenten.

12. Verfahren zur Herstellung eines Vulkanisats durch Vulkanisieren einer Mischung gemäß einem der Ansprüche 1 bis 10.

13. Vulkanisat, herstellbar nach einem Verfahren gemäß Anspruch 12.

14. Verwendung der vulkanisierbaren Mischung nach einem der Ansprüche 1 bis 10 zur Verarbeitung in der Spritzguß- oder Extrusions-Molding-Technologie sowie durch Spritzpressen, Formpressen oder Kalandrieren oder zur Herstellung von Formkörpern.

15. Spritzgußteile, hergestellt aus einer vulkanisierbaren Mischung gemäß einem der Ansprüche 1 bis 10.
